(19) Europäisches Patentamt
European Patent Office
Office européen des brevets

(11) EP 0 233 122 B1

(12) EUROPEAN PATENT SPECIFICATION

(45) Date of publication and mention
of the grant of the patent:
06.11.1996 Bulletin 1996/45

(51) Int Cl.⁶: $G01N\ 25/00$

(21) Application number: 87400283.5

(22) Date of filing: 06.02.1987

(54) **Method for measuring state of fluids**

Verfahren zur Messung des Zustandes von Fluiden

Méthode pour mesurer l'état de fluides

(84) Designated Contracting States:
DE FR GB IT NL SE

(30) Priority: 12.02.1986 JP 28280/86

(43) Date of publication of application:
19.08.1987 Bulletin 1987/34

(73) Proprietor: SNOW BRAND MILK PRODUCTS CO., LTD.
Sapporo-shi, Hokkaido 065 (JP)

(72) Inventors:
• Hori, Tomoshige
Kitamoto-shi Saitama-ken (JP)
• Itoh, Kensuke
Kodaira-shi Tokyo (JP)

(74) Representative: Joly, Jean-Jacques et al
Cabinet Beau de Loménie
158, rue de l'Université
75340 Paris Cédex 07 (FR)

(56) References cited:
EP-A- 0 144 443          EP-A- 0 150 111
EP-A- 0 214 874

• PATENT ABSTRACTS OF JAPAN VOL. 7, No. 67 (P-184)(1212), 19th March 1983; & JP-A-57 211 048

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

This invention relates to a method for measuring a state of fluid, and more particularly to a fluid state measuring method capable of collectively measuring a change in state of a running fluid on the in-line processing basis.

The "fluid" termed in the present specification means all kinds of fluids, being of a gaseous substance, a liquid substance or a solid substance such as powder, or of two or more of these substances, as well as a fluid of the type whose phase changes with time. A "change in state" of the fluid is represented by a change in viscosity, flow speed, flow direction distribution, composition or structure of the fluid.

Direct measurement of viscosity, flow speed and the like is very important for process control in a variety of industrial fields handling the fluid and is especially indispensable for process automation.

For detection of viscosity, one of the most important property values representative of the state of the fluid, there have hitherto been available a method wherein the time required for a predetermined amount of fluid to flow down through a short pipe is measured to detect viscosity, and another method wherein a pressure difference observed between an inlet port and an outlet port of a narrow pipe when a predetermined amount of fluid passes through the narrow pipe is measured to detect a change in viscosity. However, these methods have been practiced in only a limited industrial field and their widespread applications to the general process control for the fluid have not been realized.

This is because, for one thing, solid matter such as dust contained in the fluid clogs the narrow pipe and, for another thing, highly viscous liquid plays shear-rate dependent behavior and so the above methods may be applied limitedly to only a low viscous fluid removed of dust.

In the actual process, however, such a clean, low viscous liquid is used rather exceptionally and there are a variety of fluids, including a liquid system which contains highly viscous slurry, printing ink or food gels whose viscosity is decreased or increased by, for example, stirring or bubbles, a bubble system which contains bubbles whose diameter changes with time, a gaseous system which contains water droplets in suspension, and a liquid system in which colloid such as oil droplets and/or small solid matter such as metal colloidal pieces are dispersed.

For the reasons set forth above, in the past, the industrial direct measurement of fluid viscosity or of a collective fluidity characteristic value representative of viscosity for the purpose of process control in the actual process has in effect been difficult to realize.

To improve the situations, new viscosity measuring methods have recently been proposed which are different in principle from the conventional rheological or mechanical methods.

Thus, according to one method as proposed in Japanese Patent Application Laid-open No. 59-217162, US Patent No 4611928,

a curdy state of milk is examined during a milk curdling process by inserting a thin metal wire in the milk and measuring temperatures of the thin metal wire in relation to time lapse while passing an electrical current intermittently or continuously through the thin metal wire. This proposal stands accordingly for a method of detecting the milk curdling representative of a change in viscosity of the milk on the basis of a temperature rise in the electrically heated metal wire. According to another method as proposed in Japanese Patent Application Laid-open No. 60-152943, US Patent No 4578988,
a change in property of a liquid substance or of a semi-solid material is measured by inserting a thin metal wire in the liquid substance or semi-solid material, passing an electrical current continuously or intermittently through the thin metal wire such that the difference between temperature of the substance or material and temperature of the thin metal wire is kept constant and measuring a value of the electrical current conducting at that time, and calculating a coefficient of heat-transfer at the surface of the thin metal wire on the basis of the measured electrical current value. Accordingly, this latter proposal stands for a method of calculating a property value of the fluid from the amount of electrical current required to be passed through the metal wire.

These proposals are however directed to measurement of viscosity of a specified fluid such as still or substantially still liquid whose composition and phase are unchangeable and their widespread applications to the general process control for the various kinds of fluid cannot be realized without difficulty.

Further, in many applications to the actual process control, measurement of a quantity which collectively reflects a collective state of the fluid which depends on all of the viscosity, flow speed, flow distribution, composition and phase is of more significance than accurate measurement of only a specified property value indicative of viscosity. But the conventional methods are totally unsuited for the collective measurement.

SUMMARY OF THE INVENTION

An objective of this invention is to provide a method for collective and direct measurement of a state of fluid which can continuously measure, on the in-line processing basis, a quantity which fully reflects a collective state of the fluid from the standpoint of application to the process control.

According, to the invention, the above objective can be accomplished by a method for determining a collective state of a fluid at a given temperature, said collective state reflecting all of the viscosity, flow speed, flow direction, phase and content of solid matter or gas, the fluid being still or running and having a temperature which is changeable or unchangeable in time, said method comprising the steps of:

(a) thermally contacting at least one first sensor (1, 2, 3, 4) with the fluid and heating or cooling the first sensor(s) to a temperature which is substantially greater or smaller than the temperature of the fluid; the method further comprises the steps of:
(b) measuring the temperature ($\theta$w) of the said first sensor(s);
(c) measuring the temperature ($\theta\infty$) of the fluid using a second sensor different from said first sensor (s);
(d) calculating the difference between the temperature of said first sensor(s) and the temperature of the fluid as determined by said second sensor; and
(e) determining from the thus-obtained temperature difference a characteristic value reflecting the state of the fluid under examination by reference to an experimentally obtained relationship between said temperature difference and a said characteristic value indicative of said collective state of said fluid.

With the above technical means, a change with time in the quantity which collectively reflects the collective state of the fluid that depends on all of the viscosity, flow speed, flow direction, phase and content of solid matter or gas, the fluid being still or running and having a temperature which is unchangeable or changeable with time, can be measured on the in-line processing basis by measuring the temperature of the fluid and the temperature of the heated or cooled sensor element or elements which is substantially different from that of the fluid and comparing these temperatures to provide the temperature difference while thermally contacting the sensor element or elements to the fluid, thereby improving the process control to a great extent.

According to another aspect of the invention, there is provided a fluid state measuring method wherein, in addition to the aforementioned technical means, prior to or during the measurement of the temperatures of the sensor element and fluid, one or more of parameters including thermal conductivity, thermal diffusivity and coefficeient of electrical resistance of a desirably formed metal wire of the sensor element, and electrical heating current passed through the thin metal wire are measured, and a characteristic value pursuant to an experimental formula is calculated using the measured values and the temperatures of the sensor element and fluid to collectively decide a state of the fluid.

The second technical means permits collective decision on the fluid state in consideration of the influence of the fluid temperature.

BRIEF DESCRIPTION OF THE DRAWINGS

Figures 1A and 1B illustrate graphs respectively showing the relation of the temperature difference ($\Delta\theta$w) between the fluid and sensor element and the relation of kinematic viscosity ($\nu$) of the fluid, with respect to time.

Figures 2A and 2B illustrate graphs respectively showing the relation of the temperature difference ($\Delta\theta$w) between the fluid and sensor element and the relation of the flow speed (u) of the fluid, with respect to time.

Figures 3A, 3B and 3C illustrate a flow direction distribution of the fluid measured using three sensor elements of metal wire whose longitudinal axes are orthogonal to each other.

Figures 4A and 4B illustrate graphs respectively showing the relation of the temperature difference ($\Delta\theta$w) between the sensor element and a fluid containing substance (metal colloidal piece) of different thermal conductivity and thermal diffusivity and the relation of the amount of metal colloidal piece, with respect to time.

Figures 5A and 5B illustrate graphs respectively showing the relation of the temperature difference ($\Delta\theta$w) measured for gas (B), liquid (A) and (C) and coexistence of gas and liquid (D) and the relation of the temperature of the gas or liquid, with respect to time.

Figures 6A and 6B illustrates graphs respectively showing the relation of the temperature difference ($\Delta\theta$w) subjected to those variations with time which indicate the onset of turbulent flow when the sensor element has a small time constant and the relation of the temperature of the fluid, with respect to time.

Figures 7A and 7B illustrates graphs respectively showing the relation of the temperature difference ($\Delta\theta$w) and the relation of the fluid temperature during milk curdling process, with respect to time.

Figure 8 is a fragmentary schematic diagram showing an example of the sensor element.

Fig. 9A is a time chart illustrating changes with time in the fluid temperature ($\theta_\infty$), the sensor element temperature ($\theta$w) and the temperature difference ($\Delta\theta$w) during and curd making process in cheese manufacturing.

Fig. 9B exaggeratedly illustrates a portion B in Fig. 9A with the ordinate more enlarged in scale than the abscissa.

Fig. 9C exaggeratedly illustrates a portion C in Fig. 9A with the ordinate more enlarged in scale than the abscissa.

Figure 10 is a schematic block diagram showing an example of a measuring system.

Figure 11 is a graph illustrating the relation between l$\theta$w - $\theta_\infty$l/(l+$\alpha$w$\theta$w) and $\theta_\infty$ for oil containing dispersed metal colloidal pieces and fresh oil.

DESCRIPTION OF THE PREFERRED EMBODIMENTS

The invention will now be described by way of example with reference to the accompanying drawings.

A conventional temperature measuring sensor such as a resistance temperature detector is fixedly supported in a still or running fluid to measure a temperature $\theta_\infty$ of the fluid and at the same time, a single sensor element or a plurality of sensor elements whose longitudinal axes are oriented in different directions are immersed and fixedly supported in the same fluid and their contour surfaces are heated or cooled to a temperature significantly different from that of the fluid. Temperatures $\theta$wi of the sensor elements, where $i = 1$ to n with $\underline{n}$ being the number of the sensor elements, are measured while thermally contacting the sensor elements to the fluid. Absolute values of temperature differences between the fluid and the sensor elements denoted by $\Delta\theta$wi = |$\theta$wi - $\theta_\infty$| for i = 1 to n are calculated. The measurement of the $\theta_\infty$ and $\theta$wi and the comparison therebetween for obtaining the $\Delta\theta$wi are carried out in relation to time lapse to collectively examine a state of the fluid. As the sensor element, a rod-like or plate-like sensor element can be used, including a ceramic rod embedded in a heater, a ceramic plate printed with a platinum wire pattern, a platinum wire coil molded with heat-proof resin and surrounded by a stainless cover or a heat absorbing element based on the Peltier effect.

Among the characteristic values, the $\Delta\theta$wi is especially useful.

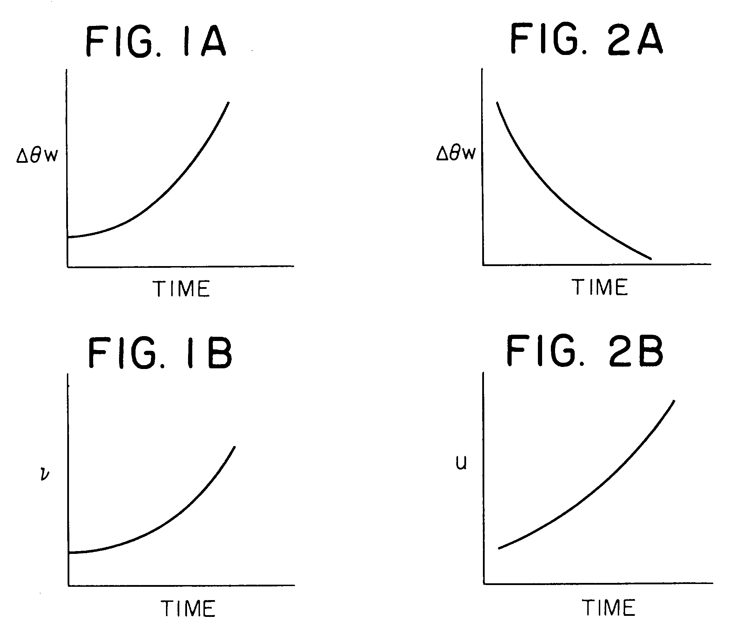

As shown in Figs. 1A and 1B,the $\Delta\theta$wi has on the one hand a positive correlation to kinematic viscosity $\nu$ of the fluid on the same time base and on the other hand it has a negative correlation to the flow velocity $\underline{u}$ of the fluid as shown in Figs. 2A and 2B.

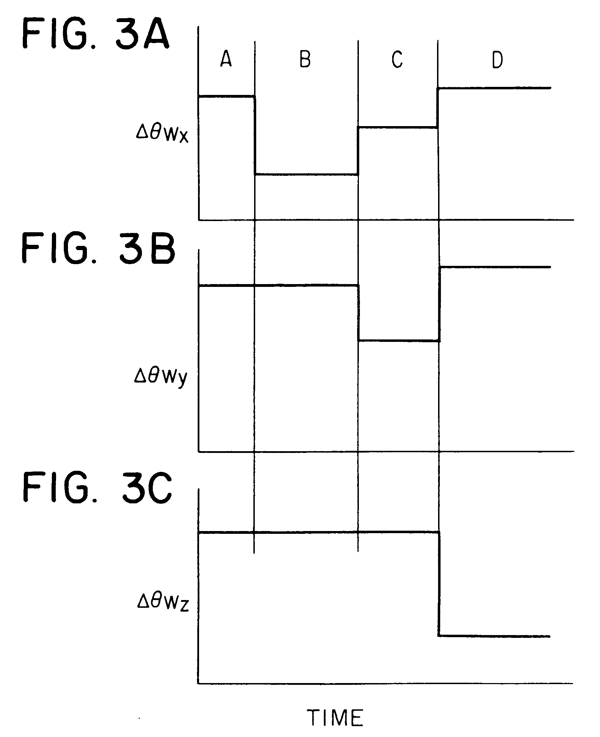

When n = 3 and three sensor elements, for example, in the form of a metal wire are arranged with their longitudinal axes oriented orthogonally to each other, in addition to the flow velocity $\underline{u}$, a flow direction distribution $\psi$ (ux, uy, uz), where ux, uy and uz represent orthogonal coordinate components of the flow velocity $\underline{u}$, can be detected on the basis of temperature differences $\Delta\theta$wx, $\Delta\theta$wy and $\Delta\theta$wz relative to the individual sensor elements, as indicated in Figs. 3A and 3B.

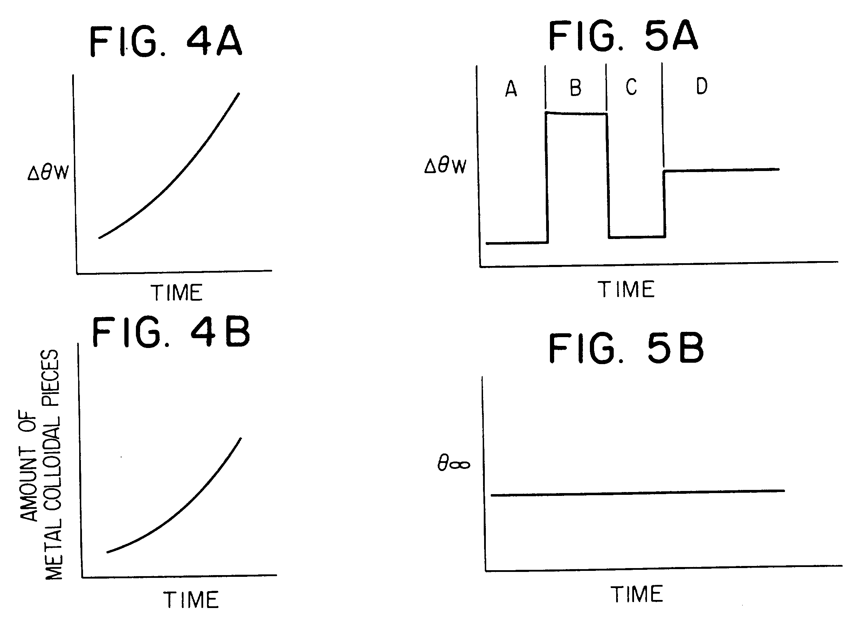

More specifically, assuming that the temperature differences relative to the individual sensor elements are obtained as shown in Figs. 3A,3B and 3C it can be decided by collectively examining the $\Delta\theta$wx, $\Delta\theta$wy and $\Delta\theta$wz that there is no flow in any direction in a region A, there is a flow in the $\underline{x}$ direction in a region B, there is a flow in an $\underline{x}$ and $\underline{y}$ direction in a region C and there is a flow in the $\underline{z}$ direction in a region D. If substances of a different thermal conductivity, thermal diffusivity or the like such as metal colloidal pieces or small bubbles, are dispersed in the fluid, the value of $\Delta\theta$wi changes greatly, having a positive correlation to the amount of metal colloidal pieces as shown in Figs. 4A and 4B, in spite of the fact that an apparent change in viscosity of the fluid is small as a whole.

Since kinematic viscosity $\nu$ is defined as $\nu = \eta/\rho$, where $\eta$ is a coefficient of viscosity and $\rho$ is density, and the $\Delta\theta$wi reflects the $\nu$ as has been explained with reference to Figs.1A and 1B, the value of $\Delta\theta$wi is large for a fluid in the form of a gas, is relatively small for a fluid in the form of liquid having relatively large $\rho$ and is intermediate as indicated by D in Fig. 5A for a system in which the gas and liquid are coexistent. Thus, as shown in Fig. 5A, a region A is for the liquid, a region B for the gas, a region C for the liquid and a region D for gas plus liquid. It will be noted that the values indicated in Fig. 5A are obtained under a condition that the fluid temperature $\theta_\infty$ remains unchanged as shown in Fig. 5B.

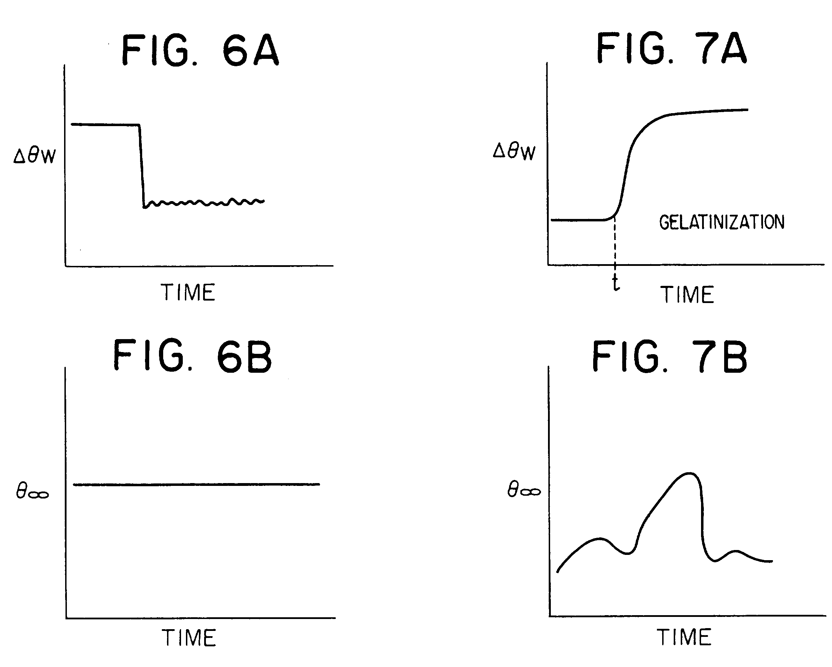

When the sensor element has a small time constant, the $\Delta\theta$wi is subjected to variations with time, indicating that small flow streams are generated which resemble a turbulent flow that is often observed in the fluid in the general process. Accordingly, an undulation association with a $\Delta\theta$w versus time curve as illustrated in Fig. 6A under the condition that the fluid temperature $\theta_\infty$ remains unchanged as shown in Fig. 6B indicates the occurrence of a turbulent flow. If, under the conditions that the fluid temperature $\theta_\infty$ is arbitrarily time-variable as shown in Fig. 7B and the $\Delta\theta$wi is not subjected to any variations indicative of the occurrence of a turbulent flow, the value of $\Delta\theta$wi increases, an increase in coefficient of viscosity $\eta$ representing, for example, gelatinization of liquid can be gathered from a $\Delta\theta$w versus time curve as shown in Fig. 7A. The gelatinization starts at time $\underline{t}$.

In a system in which composition and phase of the fluid change with time owing to intrusion of solid matter, vaporization of a low boiling point component, generation and growth of bubbles, crystallization of liquid and the like factor, in addition to the aforementioned temperatures $\theta_\infty$ and $\theta$w of the fluid and heater and the difference |$\theta$w - $\theta_\infty$| therebetween, thermal conductivity $\lambda$, thermal diffusivity $\underline{a}$ and coefficient of volumetric expansion $\beta$ of the fluid are measured, electrical resistance Ro at 0°C and temperature coefficient of electrical resistance $\alpha$w of a thin metal wire which is assumed to be a main component of the heater are supplied, and a value of heating current $\underline{i}$ passed through the metal wire, if being variable, is measured. Then, a characteristic value, for example, |$\theta$w - $\theta_\infty$|/(I+$\alpha$w$\theta$w) defined by one or more of the above quantities $\theta_\infty$, $\theta$w, |$\theta$w - $\theta_\infty$|, $\lambda$, $\underline{a}$, $\beta$, Ro, $\alpha$w and $\underline{i}$ is used to decide a collective characteristic value in consideration of the influence of the fluid temperature.

Among various methods of measuring thermal conductivity and thermal diffusivity, a transient hot wire method may preferably be employed for measurement of these physical properties of the fluid.

The transient hot wire method is also used for measurement of the temperature of fluid and to this end, an electrical current is continuously passed through a single metal wire fixedly supported in a fluid. But for measurement of thermal conductivity and thermal diffusivity, changes in temperature of the metal wire are detected twice at one-second and two-seconds points immediately after conduction of the electrical current.

In some applications, the running of the entirety or part of the fluid is stopped continuously or intermittently. For example, where changes in viscosity are desired to be known, it is impossible to discriminate a change in viscosity from a change in flow if the latter change is in excess of the former change, and therefore the influence of flow must be eliminated for the sake of detection of a small change in the viscosity.

Considering that complete stoppage of the flow during processing is impractical, viscosity is preferably measured for a fluid which has been passed through a bypass for temporary stoppage, thereby ensuring that a change in viscosity of a fluid subject to a large change in flow speed can be detected accurately.

The invention will be described in greater detail by referring to experimental examples.

EXAMPLE 1

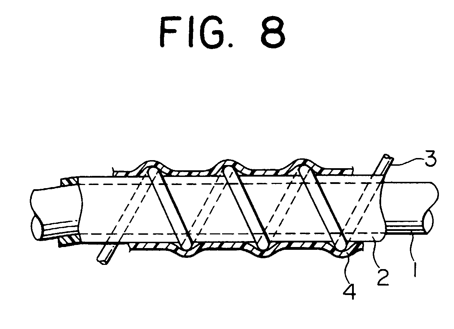

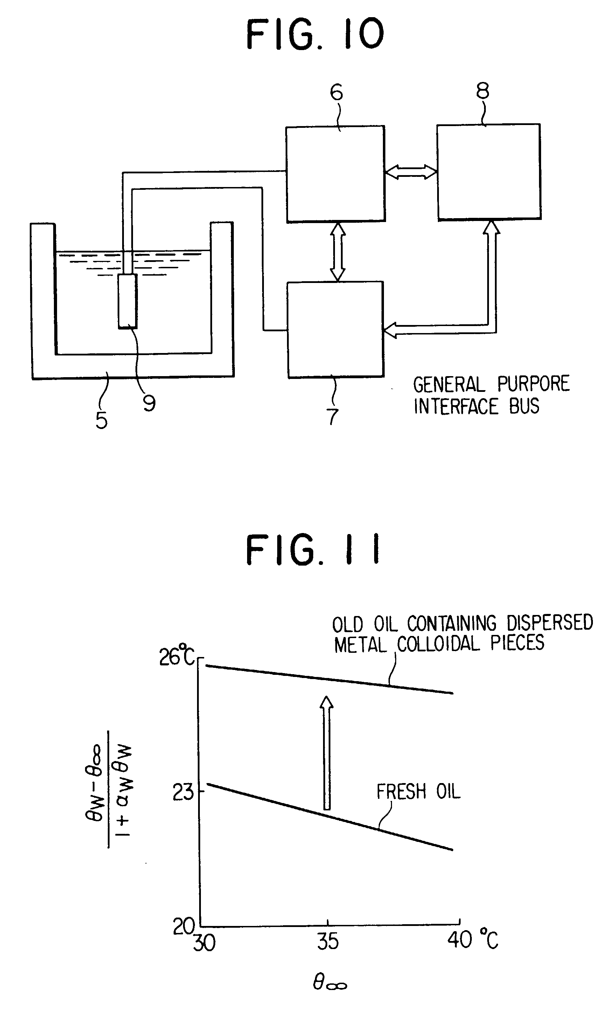

A sensor element is for use with a cheese curd preparation tank of 15 m$^3$ in volume and is comprised, as shown in Fig. 8, of a stainless rod 1 covered with an electrically insulating member 2 of Teflon (polytetrafluoroethylene), a thin metal wire 3 of platinum wound about member 2 and an electrically insulating member 4 of Teflon (polytetrafluoroethylene) covering the platinum wire winding. The sensor element has a resistance Ro of 3.6172 $\Omega$ at 0°C, a temperature coefficient of electrical resistance $\alpha$w of 0.003817 1/°C and a length of heating portion of 5 cm. A measuring system as shown in Fig. 10 is employed for continuously measuring a temperature $\theta$w of the sensor element calculated pursuant to a formula $\theta$w = (R/Ro - l)/$\alpha$w, in general,

$$R = \sum_{i=0}^{n} C_i \theta w^i$$

where R is a resistance of the sensor element at $\theta$w, by using a terminal voltage across the sensor element detected under a condition that the sensor element is heated by conduction of a direct current of 0.4 A and by using a temperature $\theta_\infty$ of a fluid in the tank (air, water vapor, milk, milk curd, whey, hot water, cleanser and the like) detected by means of a platinum resistance temperature detector. Therefore, $\theta$w can be determined numerically by using a computer, for example.

The measuring system of Fig. 10 comprises the tank 5, a current source 6, a voltage measuring unit 7, a controller 8 and the resistance temperature detector and sensor element generally designated at 9.

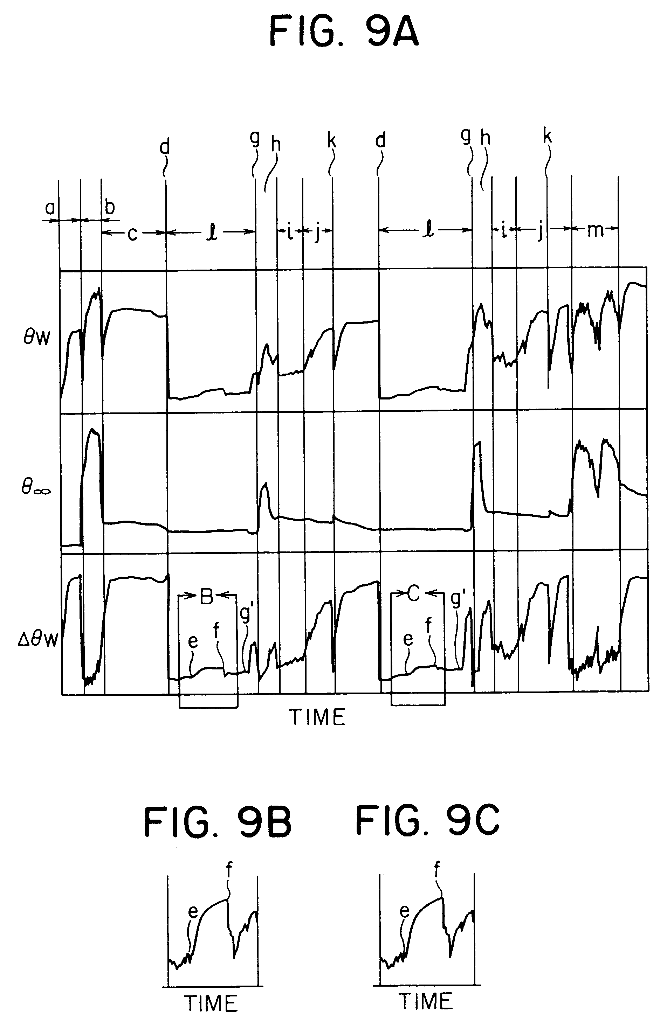

When the tank is initially empty, the fluid temperature $\theta_\infty$ approximates the room temperature, amounting to a relatively low value and the $\Delta\theta$w reflecting kinematic viscosity $\nu$ of air amounts to a large value as indicated at a region $\underline{a}$ in Fig. 9A. As boiling water is sprayed into the tank for sterilization, the temperature $\theta$w of the sen-

sor element is affected by the temperature of boiling water to increase as indicated at a region $\underline{b}$ in Fig. 9A but the temperature difference $\Delta\theta$w between the boiling water and sensor element now reflects kinematic viscosity $\nu$ of the boiling water and decreases abruptly, accompanied by a turbulent state due to spraying.

When the sterilization ends and the tank becomes empty, the temperature $\theta_\infty$ of the fluid within the tank again decreases and the temperature difference $\Delta\theta$w again increases. This state continues throughout a region $\underline{c}$ until the $\Delta\theta$w is abruptly decreased upon completion of supplying milk as indicated at a point $\underline{d}$ in Fig. 9A.

A portion B in Fig. 9A is enlarged in Fig. 9B and a portion C in Fig. 9A is enlarged in Fig. 9C. Referring to Figs. 9B and 9C, an enzyme reaction proceeds between points $\underline{d}$ (in Fig. 9A) and $\underline{e}$ and thereafter an increase in the coefficient of viscosity $\eta$ due to curdling, i.e., gelatinization under constant $\theta_\infty$ and a decrease in the temperature difference $\Delta\theta$w due to running caused by cutting the curdy milk are observed at a point $\underline{f}$ in Figs. 9B and 9C. Subsequently, as part of whey is discharged to the outside of the tank and the liquid level within the tank is lowered, the temperature difference $\Delta\theta$w increases abruptly as indicated at point $\underline{g}'$ in Fig. 9A. The $\Delta\theta$w is then decreased at point $\underline{g}$.

Thereafter, hot water is sprayed at a region $\underline{h}$ in Fig. 9A and stirred vigorously at a region $\underline{i}$ in Fig. 9A. Then the tank is emptied at a region $\underline{j}$, followed by a process to remove fine curds on the inside surface of the tank with jet-spraying water at a point $\underline{k}$, a curdling process at a region $\underline{\ell}$ and final cleaning with heated alkaline and acid cleanser at a region $\underline{m}$, thus completing a series of curd making process.

In this manner, various types of change in state of the fluid within the tank can be measured collectively from the values of $\theta_\infty$, $\theta$w and $\Delta\theta$w in accordance with the method of the invention.

EXAMPLE 2

A sensor element in the form of a platinum wire (Ro = 1.3186 $\Omega$, $\alpha$w = 0.003817 l/C°) having a length of 100 mm and a diameter of 0.1 mm is vertically supported in fresh mineral oil and otherwise in mineral oil in which metal colloidal pieces of about 1 $\mu$m diameter are dispersed at a concentration of 100 ppm, and is heated by conduction of an electrical current of 0.7 A through the platinum wire. The temperature $\theta$w of the wire is measured while cooling the sample oil from 45°C at a rate of about 1°C/hr, to obtain the relation between l$\theta$w - $\theta_\infty$l/(l + $\alpha$w$\theta$w) and temperature $\theta_\infty$ of the mineral oil. Results are graphically illustrated in Fig. 11, clearly indicating that kinematic viscosity $\nu$ positively correlated to l$\theta$w - $\theta_\infty$l/(l + $\alpha$w$\theta$w) of the fresh mineral oil increases as the temperature $\theta_\infty$ decreases and that a collective characteristic value related to viscosity of the mineral oil containing dispersed metal colloidal pieces changes with the temperature $\theta_\infty$ on account of vaporization of the dispersed metal colloidal pieces and of a low boiling point component.

Although particular preferred embodiments of the invention have been disclosed in detail for illustrative purposes, it will be recognized that variations or modifications ; e.g., the present measurements for melting and flowing resins at high temperature and high pressure of the disclosed methods lie within the scope of the present invention.

### Claims

1. A method for determining a collective state of a fluid at a given temperature, said collective state reflecting all of the viscosity, flow speed, flow direction, phase and content of solid matter or gas, the fluid being still or running and having a temperature which is changeable or unchangeable in time, said method comprising the steps of:

   (a) thermally contacting at least one first sensor (1, 2, 3, 4) with the fluid and heating or cooling the first sensor(s) to a temperature which is substantially greater or smaller than the temperature of the fluid; the method further comprises the steps of:
   (b) measuring the temperature ($\theta$w) of the said first sensor(s);
   (c) measuring the temperature ($\theta\infty$) of the fluid using a second sensor different from said first sensor ;
   (d) calculating the difference between the temperature of the first sensor(s) and the temperature of the fluid as determined by said second sensor; and
   (e) determining from the thus-obtained temperature difference a characteristic value reflecting the state of the fluid under examination by reference to an experimentally obtained relationship between said temperature difference and said characteristic value indicative of said collective state of said fluid.

2. The method of claim 1, characterized in that said first sensor means (1, 2, 3, 4) comprises an electrical resistor (3) which generates heat by applying an electric current thereto.

3. The method of claim 1 or 2, characterized in that said first sensor means (1, 2, 3, 4) comprises a heat-absorbing element based on the Peltier effect.

4. The method of claim 2 or 3, characterized in that the electric current is a direct electric current.

### Patentansprüche

1. Verfahren zur Messung des kollektiven Zustandes eines Fluides bei einer vorgegebenen Temperatur, wobei dieser kollektive Zustand sie alle, die Viskosität, die Strömungsgeschwindigkeit, die Strömungsrichtung, die Phase und den Gehalt von festen Bestandteilen oder Gas wiederspiegelt und wobei das Fluid sich im Ruhezustand oder in Bewegung befindet; dieses Verfahren umfaßt die Schritte:

   (a) thermische Kontaktierung zumindest eines ersten Sensors (1, 2, 3, 4) mit dem Fluid und Erwärmen oder Kühlen des (der) ersten Sensor (en) auf eine Temperatur, die wesentlich höher oder niedriger als die Temperatur des Fluides ist; das Verfahren umfaßt weiterhin die Schritte:
   (b) Messen der Temperatur ($\theta$w) des (der) ersten Sensor(en)s;
   (c) Messen der Temperatur ($\theta\infty$) des Fluids, wobei ein von dem (den) ersten Sensor(en) abweichender Sensor verwendet wird;
   (d) Berechnen der Differenz zwischen der Temperatur des (der) ersten Sensor(en)s und der Temperatur des Fluids, die durch den zweiten Sensor bestimmt ist; und
   (e) Bestimmung eines charakteristischen Wertes ausgehend von der so erhaltenen Temperaturdifferenz, der den Zustand des Fluides bei der Untersuchung wiederspiegelt durch Bezugnahme auf eine experimentell erhaltene Beziehung zwischen der Temperaturdifferenz und dem charakteristischen Wert, der den kollektiven Zustand des Fluids anzeigt.

2. Verfahren nach Anspruch 1, dadurch gekennzeichnet, daß die erste Sensoreinrichtung (1, 2, 3, 4) einen elektrischen Widerstand (3) umfaßt, welcher Wärme bei Anwendung eines elektrischen Stromes erzeugt.

3. Verfahren nach Anspruch 1 oder 2, dadurch gekennzeichnet, daß die erste Sensoreinrichtung (1, 2, 3, 4) ein wärmeaufnehmendes Element umfaßt, das auf dem Peltier-Effekt beruht.

4. Verfahren nach Anspruch 2 oder 3, dadurch gekennzeichnet, daß der elektrische Strom Gleichstrom ist.

### Revendications

1. Procédé pour déterminer l'état collectif d'un fluide à une température donnée, ledit état collectif reflétant tout à la fois la viscosité, la vitesse d'écoulement, la direction d'écoulement, la phase et la teneur en matières solides ou en gaz, le fluide étant au repos ou en mouvement et ayant une température qui est variable ou invariable au cours du temps, ledit procédé comprenant les étapes consistant à :

(a) mettre en contact thermiquement au moins un premier capteur (1, 2, 3, 4) avec le fluide et chauffer ou refroidir le ou les premiers capteurs à une température qui est sensiblement supérieure ou inférieure à la température du fluide, le procédé comprenant en outre les étapes consistant à:

(b) mesurer la température ($\theta$w) dudit ou desdits premiers capteurs ;

(c) mesurer la température ($\theta\infty$) du fluide au moyen d'un second capteur différent dudit premier capteur ;

(d) calculer la différence entre la température du ou des premiers capteurs et la température du fluide telle que déterminée par ledit second capteur ; et

(e) déterminer d'après la différence de température ainsi obtenue une valeur caractéristique reflétant l'état du fluide en cours d'examen par référence à une relation obtenue expérimentalement entre ladite différence de température et ladite valeur caractéristique qui constitue une indication dudit état collectif dudit fluide.

2. Procédé selon la revendication 1, caractérisé en ce que ledit premier moyen capteur (1, 2, 3, 4) comprend une résistance électrique (3) qui produit de la chaleur par application d'un courant électrique à celle-ci.

3. Procédé selon la revendication 1 ou 2, caractérisé en ce que ledit premier moyen capteur (1, 2, 3, 4) comprend un élément absorbant la chaleur basé sur l'effet Peltier.

4. Procédé selon la revendication 2 ou 3, caractérisé en ce que le courant électrique est un courant électrique continu.

FIG. IA

$\Delta\theta$w

TIME

FIG. 2A

$\Delta\theta$w

TIME

FIG. IB

$\nu$

TIME

FIG. 2B

u

TIME

EP 0 233 122 B1

# FIG. 3A

A | B | C | D

$\Delta\theta$Wx

# FIG. 3B

$\Delta\theta$Wy

# FIG. 3C

$\Delta\theta$Wz

TIME

# FIG. 4A

# FIG. 4B

# FIG. 5A

# FIG. 5B

# FIG. 6A

$\Delta\theta$w

TIME

# FIG. 7A

$\Delta\theta$w

GELATINIZATION

t

TIME

# FIG. 6B

$\theta\infty$

TIME

# FIG. 7B

$\theta\infty$

TIME

# FIG. 8

# FIG. 9A

# FIG. 9B    FIG. 9C

# FIG. 10

GENERAL PURPORE
INTERFACE BUS

# FIG. 11

OLD OIL CONTAINING DISPERSED
METAL COLLOIDAL PIECES

FRESH OIL

$$\frac{\theta_W - \theta_\infty}{1 + \alpha_W \theta_W}$$

$\theta_\infty$